# EUROPÄISCHE PATENTSCHRIFT

(11) **EP 2 695 150 B1**
(45) Veröffentlichungstag und Bekanntmachung des Hinweises auf die Patenterteilung: **04.03.2015**
(21) Anmeldenummer: 12721257.9
(22) Anmeldetag: 10.05.2012
(51) Int. Cl.: G08B 5/36, G08B 29/10, G08G 1/095, B61L 5/18

(54) **LICHTSIGNALEINRICHTUNG SOWIE VERFAHREN ZUM ERMITTELN DES VERSCHMUTZUNGSGRADES EINER ABSCHLUSSSCHEIBE EINES SIGNALGEBERS**
LIGHT SIGNAL DEVICE AND METHOD FOR ASCERTAINING THE DEGREE OF SOILING OF A SHUTTER DISC FOR A SIGNAL GENERATOR
DISPOSITIF DE SIGNALISATION LUMINEUSE ET PROCÉDÉ PERMETTANT DE DÉTERMINER LE DEGRÉ DE SALISSURE D'UNE VITRE DE FERMETURE D'UN ÉMETTEUR DE SIGNAUX

(30) Priorität: 19.05.2011 DE 102011076123
(43) Veröffentlichungstag der Anmeldung: 12.02.2014
(73) Patentinhaber: Siemens Aktiengesellschaft, 80333 München (DE)
(72) Erfinder: TEMMING, Rudolf, 38154 Königslutter (DE)
(86) Internationale Anmeldenummer: PCT/EP2012/058624
(87) Internationale Veröffentlichungsnummer: WO 2012/156270

(56) Entgegenhaltungen:
- WO-A1-2008/154737
- DE-A1-102004 035 438

## Beschreibung

Lichtsignaleinrichtungen werden beispielsweise im Bereich der Eisenbahnsicherungstechnik zur Signalisierung von Halt- und Fahrtbegriffen oder auch im Zusammenhang mit Symboldisplays verwendet. Darüber hinaus finden Lichtsignaleinrichtungen, etwa in Form von Ampeln oder Ampelanlagen, beispielsweise auch im Bereich des Straßenverkehrs Anwendung. Entsprechende Lichtsignaleinrichtungen weisen üblicherweise Signalgeber auf, die eine Lichtquelle und eine Abschlussscheibe aufweisen. Dabei ist die Signalinformation der Lichtsignaleinrichtung beziehungsweise des jeweiligen Signalgebers in dem aus der Abschlussscheibe austretenden Licht enthalten. So kann die Signalinformation beispielsweise in der Information "Signalgeber an/aus", der Farbe des angezeigten Signals oder der Art eines dargestellten Symbols bestehen.

Unabhängig von der Art der angezeigten Information sind die Abschlussscheiben von Signalgebern aufgrund der im Betrieb üblicherweise auftretenden Verschmutzung zur Sicherstellung der Erkennbarkeit der Lichtsignaleinrichtung beziehungsweise der von ihr signalisierten Signalinformation in regelmäßigen zeitlichen Abständen zu reinigen. Dies gilt insbesondere für solche Lichtsignaleinrichtungen, mit denen wie beispielsweise im Bereich der Eisenbahnsignal- beziehungsweise Eisenbahnsicherungstechnik sicherheitsrelevante Informationen übertragen werden. Üblicherweise erfolgt daher in regelmäßigen zeitlichen Abständen - unabhängig von dem tatsächlichen Verschmutzungsgrad der Lichtsignaleinrichtung beziehungsweise der Abschlussscheibe des Signalgebers - eine Reinigung der Abschlussscheibe des Signalgebers. Dies kann einerseits dazu führen, dass eine Reinigung bereits zu einem Zeitpunkt durchgeführt wird, zu dem diese eigentlich noch nicht erforderlich wäre. Des Weiteren kann auch der sicherheitstechnisch kritischere Fall auftreten, dass eine ungewöhnlich stark verschmutzte Abschlussscheibe turnusmäßig erst zu einem Zeitpunkt gereinigt wird, zu dem aufgrund des Verschmutzungsgrades sowie der hierdurch verursachten schlechten Erkennbarkeit der Signalinformation bereits eine Gefährdung eingetreten ist.

Die vorliegende Erfindung betrifft eine Lichtsignaleinrichtung mit zumindest einem Lichtsensor sowie einem Signalgeber, der eine Lichtquelle und eine Abschlussscheibe aufweist.

Eine solche Lichtsignaleinrichtung ist aus der veröffentlichten deutschen Patentanmeldung DE 10 2004 035 438 A1 bekannt. Diese beschreibt eine Lichtsignalanlage für den Straßenverkehr, die zum Ermitteln eines Verschmutzungsgrades einer Abschlussscheibe in Form einer Streuscheibe einen Lichtsensor aufweist, der auf die Streuscheibe ausgerichtet ist. Hierbei dient der Lichtsensor zur Ermittlung des Verschmutzungsgrades der Streuscheibe anhand der Intensität des von der verschmutzten Streuscheibe reflektierten Lichts, wodurch vorteilhafterweise in Abhängigkeit von dem ermittelten Verschmutzungsgrad eine bedarfsgerechte Reinigung der Streuscheibe sichergestellt werden kann.

Der vorliegenden Erfindung liegt die Aufgabe zugrunde, eine Lichtsignaleinrichtung der zuvor genannten Art anzugeben, die eine besonders zuverlässige und genaue Ermittlung des Verschmutzungsgrades der Abschlussscheibe des Signalgebers ermöglicht.

Diese Aufgabe wird erfindungsgemäß gelöst durch eine Lichtsignaleinrichtung mit zumindest einem Lichtsensor sowie einem Signalgeber, der eine Lichtquelle und eine Abschlussscheibe aufweist, wobei an der Innenseite einer die Abschlussscheibe schützenden Abschirmblende zumindest ein Reflektorelement vorgesehen ist, durch das ein Teil des von der Lichtquelle ausgestrahlten Lichts in Richtung des zumindest einen Lichtsensors reflektiert wird.

Die erfindungsgemäße Lichtsignaleinrichtung weist eine die Abschlussscheibe schützenden Abschirmblende auf. Entsprechende Abschirmblenden, die auch als Schute bezeichnet werden, schützen üblicherweise die Abschlussscheiben, d.h. die optischen Flächen beziehungsweise Leuchtfelder, von Lichtsignaleinrichtungen beziehungsweise Signalanlagen insbesondere vor direktem Sonnenlichteinfall. Hierdurch soll verhindert werden, dass Verkehrsteilnehmer oder im Falle einer Lichtsignaleinrichtung im Bereich des Eisenbahnverkehrs beispielsweise Lokführer das von der Lichtsignaleinrichtung angezeigte Signal aufgrund von Sonneneinstrahlung unter Umständen nicht korrekt oder zu spät erkennen und hierdurch ein erhöhtes Unfallrisiko entsteht.

Bei der erfindungsgemäßen Lichtsignaleinrichtung ist nun an der Innenseite einer entsprechenden Abschirmblende zumindest ein Reflektorelement vorgesehen, durch das ein Teil des von der Lichtquelle der Lichtsignaleinrichtung ausgestrahlten Lichts in Richtung des zumindest einen Lichtsensors reflektiert wird. Hierbei erfolgt somit eine gezielte Reflektion von Licht der Lichtquelle derart, dass das reflektierte Licht durch den zumindest einen Lichtsensor erfasst wird. Dies ermöglicht vorteilhafterweise weitgehend unabhängig von den jeweiligen Umgebungsbedingungen eine zuverlässige und gleichzeitig vergleichsweise genaue Bestimmung des Verschmutzungsgrades der Abschlussscheibe des Signalgebers anhand der Intensität beziehungsweise Stärke des durch den zumindest einen Lichtsensor erfassten Lichts der Lichtquelle. Vorteilhafterweise ist das zumindest eine Reflektorelement hierbei durch seine Anbringung an der Innenseite der Abschirmblende gegen Umwelt- beziehungsweise Witterungseinflüsse und Beschädigungen weitgehend geschützt.

Grundsätzlich kann der zumindest eine Lichtsensor an einer beliebigen Stelle der Lichtsignaleinrichtung angeordnet sein. Voraussetzung ist lediglich, dass mittels des Reflektorelements ein Teil des von der Lichtquelle ausgestrahlten Lichts in Richtung und damit in den Erfassungsbereich des zumindest einen Lichtsensors reflektiert wird. So ist es grundsätzlich beispielsweise denkbar, dass auch der zumindest eine Lichtsensor oder im Falle mehrerer Lichtsensoren zumindest einer der Lichtsensoren an der Innenseite der Abschirmblende vorgesehen ist.

Gemäß einer besonders bevorzugten Weiterbildung der erfindungsgemäßen Lichtsignaleinrichtung ist der zumindest eine Lichtsensor innerhalb eines Gehäuses des Signalgebers angeordnet. Dies bietet den Vorteil, dass der zumindest eine Lichtsensor durch das Gehäuse des Signalgebers bestmöglich vor Beschädigungen und Witterungseinflüssen geschützt wird. Des Weiteren ist durch eine Anordnung des zumindest einen Lichtsensors innerhalb des Gehäuses des Signalgebers auch eine besonders einfache Anbindung des zumindest einen Lichtsensors an weitere Komponenten des Signalgebers beziehungsweise der Lichtsignaleinrichtung, wie beispielsweise eine Stromversorgung oder eine Auswerteelektronik, möglich.

Im Rahmen der erfindungsgemäßen Lichtsignaleinrichtung kann die Lichtquelle auf beliebige Art und Weise ausgebildet sein.

Dies schließt insbesondere ein, dass die Lichtquelle eine oder mehrere Glühlampen umfassen kann.

Gemäß einer weiteren besonders bevorzugten Ausführungsform der erfindungsgemäßen Lichtsignaleinrichtung ist der Signalgeber ein LED-Signalgeber. Dies ist vorteilhaft, da LEDs (Light-emitting Diodes beziehungsweise lichtemittierende Dioden) gegenüber anderen Leuchtmitteln, wie etwa Glühlampen, in der Praxis erhebliche Vorteile aufweisen. Dies gilt beispielsweise in Bezug auf ihren Energieverbrauch, ihre Langlebigkeit sowie ihre Lichtstärke und hat dazu geführt, dass LED-Signalgeber, d.h. Signalgeber, bei denen die Lichtquelle zumindest eine LED umfasst, für Lichtsignaleinrichtungen, beispielsweise im Bereich der Eisenbahnsignaltechnik oder des Straßenverkehrs, zunehmende Verbreitung finden.

Vorzugsweise kann die erfindungsgemäße Lichtsignaleinrichtung auch derart ausgestaltet sein, dass die Lichtsignaleinrichtung zum Unterscheiden des von dem zumindest einen Reflektorelement reflektierten Lichts der Lichtquelle von Fremdlicht ausgebildet ist. Dies ist vorteilhaft, da hierdurch eine von den jeweiligen Umgebungsbedingungen, d.h. insbesondere einfallendem Fremd- beziehungsweise Umgebungslicht unabhängige Ermittlung des Verschmutzungsgrades der Abschlussscheibe des Signalgebers ermöglicht wird. Hierzu ist es beispielsweise denkbar, dass das Licht der Lichtquelle des Signalgebers anhand seiner Wellenlänge von Fremdlicht unterschieden wird. In diesem Zusammenhang kann beispielsweise mittels eines optischen Filters lediglich Licht eines bestimmten Wellenlängenbereichs durch den zumindest einen Lichtsensor erfasst und damit zur Bestimmung des Verschmutzungsgrades der Abschlussscheibe herangezogen werden.

Gemäß einer weiteren besonders bevorzugten Weiterbildung ist die erfindungsgemäße Lichtsignaleinrichtung derart ausgeprägt, dass die Lichtquelle zur Modulation des ausgestrahlten Lichts ausgebildet ist und die Lichtsignaleinrichtung derart ausgebildet ist, dass sie das von dem zumindest einen Reflektorelement reflektierte Licht der Lichtquelle anhand der Modulation von Fremdlicht unterscheidet. Dies ist vorteilhaft, da beispielsweise Lichtquellen in Form von LEDs üblicherweise bereits moduliertes Licht ausstrahlen und die entsprechende Modulation dazu verwendet werden kann, das reflektierte Licht der Lichtquelle von Fremdlicht zu unterscheiden. Anhand der Modulation ist somit auf vergleichsweise einfache Art und Weise eine Unterscheidung des Lichts der Lichtquelle von dem hinsichtlich seiner Intensität sowohl im Tages- als auch im Jahresverlauf üblicherweise stark schwankenden Fremd- beziehungsweise Umgebungslicht möglich.

Gemäß einer weiteren besonders bevorzugten Ausführungsform der erfindungsgemäßen Lichtsignaleinrichtung weist die Lichtsignaleinrichtung eine Auswerteeinrichtung auf zum Bestimmen des Verschmutzungsgrades der Abschlussscheibe anhand der Intensität des durch den zumindest einen Lichtsensor erfassten Lichts. Dies ist vorteilhaft, da es hierdurch seitens der Lichtsignaleinrichtung ermöglicht wird, den Verschmutzungsgrad der Abschlussscheibe selbsttätig zu ermitteln. Dies bietet den Vorteil, dass eine Signalisierung einer Diagnosemeldung an eine übergeordnete Steuereinheit vorteilhafterweise nur dann erforderlich ist, wenn seitens der Auswerteeinrichtung eine Verschmutzung der Abschlussscheibe des Signalgebers festgestellt wird, die eine baldige Reinigung der Abschlussscheibe erforderlich macht.

Vorzugsweise kann die erfindungsgemäße Lichtsignaleinrichtung auch derart ausgeführt sein, dass die Lichtsignaleinrichtung eine Kommunikationsschnittstelle aufweist zum Übertragen von Messwerten des zumindest einen Lichtsensors und/oder einer Information zum Verschmutzungsgrad der Abschlussscheibe an eine Steuereinheit. Dies ist vorteilhaft, da somit der Steuereinheit, bei der es sich beispielsweise um eine zentrale Steuereinheit in Form eines Stellwerks beziehungsweise eine Komponente eines solchen handeln kann, mittelbar oder unmittelbar Informationen zum Verschmutzungsgrad der Abschlussscheibe des Signalgebers der betreffenden Lichtsignaleinrichtung zur Verfügung gestellt werden. Hierbei ist es einerseits möglich, dass Messwerte des zumindest einen Lichtsensors an die Steuereinheit übertragen werden und die Auswertung dieser Messwerte sowie die Ermittlung des Verschmutzungsgrades der Abschlussscheibe des Signalgebers der Lichtsignaleinrichtung durch die Steuereinheit vorgenommen werden. Andererseits kann durch eine zusätzliche oder alternative Übertragung der Information zum Verschmutzungsgrad der Abschlussscheibe an die Steuereinheit vorteilhafterweise entweder eine zusätzliche Information an die Steuereinheit übermittelt oder aber die Menge der an die Steuereinheit zu übertragenden Daten beziehungsweise Informationen reduziert werden.

Gemäß einer weiteren besonders bevorzugten Weiterbildung kann die erfindungsgemäße Lichtsignaleinrichtung auch derart ausgeführt sein, dass die Kommunikationsschnittstelle als Zweidrahtschnittstelle ausgebildet ist und der Signalgeber ausgebildet ist, die Messwerte des zumindest einen Lichtsensors und/oder die Information zum Verschmutzungsgrad der Abschlussscheibe durch Veränderung eines über die Zweidrahtleitung fließenden Stroms an die Steuereinheit zu übertragen. Dies ist vorteilhaft, da Zweidrahtleitungen zur Anbindung von Signalgebern an Steuereinheiten insbesondere im Falle von Signalgebern mit Lichtquellen in Form von Glühlampen weitverbreitet sind und damit insbesondere auch für solche Lichtsignaleinrichtungen, bei denen Signalgeber mit Glühlampen durch LED-Signalgeber ersetzt werden beziehungsweise ersetzt worden sind, eine Übertragung von Informationen zum Verschmutzungsgrad der Abschlussscheibe des Signalgebers über die Zweidrahtschnittstelle möglich ist. Vorzugsweise wird der über die Zweidrahtleitung fließende elektrische Strom hierbei durch den Signalgeber derart verändert, dass ein üblicher beziehungsweise gültiger Bereich des elektrischen Stroms verlassen wird. Anhand der Veränderung des über die Zweidrahtleitung fließenden elektrischen Stroms ist es seitens der Steuereinheit vorteilhafterweise möglich, eine Diagnosemeldung zu erkennen und hieraus somit auf den Verschmutzungsgrad beziehungsweise Verschmutzungszustand des Signalgebers beziehungsweise seiner Abschlussscheibe zu schließen. Dies bietet den Vorteil, dass auch für solche Lichtsignaleinrichtungen, bei denen Signalgeber mit Glühlampen durch LED-Signalgeber ersetzt worden sind, eine bedarfsgerechte Wartung in Form einer Reinigung der Abschlussscheibe des Signalgebers möglich ist, so dass Beeinträchtigungen zuverlässig verhindert werden können, ohne dass hierfür rein vorsorglich, d.h. ohne tatsächlichen Bedarf, eine Wartungsmaßnahme erforderlich ist. Die Übertragung der Messwerte beziehungsweise der Information zum Verschmutzungsgrad der Abschlussscheibe kann hierbei beispielsweise derart erfolgen, dass beim Einschalten des Signalgebers eine Veränderung des über die Zweidrahtleitung fließenden elektrischen Stroms vorgenommen wird. Durch das Erzeugen etwa eines fehlerhaften Stromwertes beim Einschalten des Signalgebers kann hierbei erreicht werden, dass seitens der Steuereinheit zunächst eine Störung angezeigt wird und diese als Diagnosemeldung in Form einer Information zum Verschmutzungsgrad der Abschlussscheibe erkannt werden kann. Alternativ oder zusätzlich hierzu ist es beispielsweise auch denkbar, dass der über die Zweidrahtleitung fließende elektrische Strom temporär verändert wird. Hierbei kann der über die Zweidrahtleitung fließende elektrische Strom beispielsweise für eine vorbestimmte Zeit und/oder eine vorbestimmte Anzahl von Einschaltvorgängen des LED-Signalgebers verändert werden. Dabei kann der über die Zweidrahtleitung fließende elektrische Strom beispielsweise bis zum nächsten Einschaltvorgang oder auch während einer bestimmten Anzahl von Einschaltvorgängen verändert werden. Alternativ oder zusätzlich zu den zuvor genannten Ausführungsformen ist es beispielsweise auch möglich, dass der über die Zweidrahtleitung fließende elektrische Strom gemäß zumindest einem Zeit-Strom-Muster verändert wird und hierdurch die Messwerte des zumindest einen Lichtsensors und/oder die Information zum Verschmutzungsgrad der Abschlussscheibe an die Steuereinheit übertragen werden.

Die Erfindung betrifft des Weiteren ein Verfahren zum Ermitteln des Verschmutzungsgrades einer Abschlussscheibe eines Signalgebers.

Hinsichtlich des Verfahrens liegt der vorliegenden Erfindung die Aufgabe zugrunde, ein besonders zuverlässiges und genaues Verfahren zum Ermitteln des Verschmutzungsgrades einer Abschlussscheibe eines Signalgebers anzugeben.

Diese Aufgabe wird erfindungsgemäß gelöst durch ein Verfahren zum Ermitteln des Verschmutzungsgrades einer Abschlussscheibe eines Signalgebers, wobei mittels zumindest eines Lichtsensors von einer Lichtquelle des Signalgebers ausgestrahltes, von zumindest einem an der Innenseite einer die Abschlussscheibe schützenden Abschirmblende vorgesehenen Reflektorelement in Richtung des zumindest einen Lichtsensors reflektiertes Licht erfasst wird und anhand der Intensität des durch den zumindest einen Lichtsensor erfassten Lichts der Verschmutzungsgrad der Abschlussscheibe ermittelt wird.

Die Vorteile des erfindungsgemäßen Verfahrens entsprechen denjenigen der erfindungsgemäßen Lichtsignaleinrichtung, so dass diesbezüglich auf die entsprechenden vorstehenden Ausführungen verwiesen wird. Gleiches gilt hinsichtlich der im Folgenden genannten bevorzugten Weiterbildungen des erfindungsgemäßen Verfahrens in Bezug auf die entsprechenden bevorzugten Weiterbildungen der erfindungsgemäßen Lichtsignaleinrichtung, so dass auch diesbezüglich auf die entsprechenden vorstehenden Erläuterungen verwiesen wird.

Vorzugsweise kann das erfindungsgemäße Verfahren derart ausgestaltet sein, dass das von dem zumindest einem Reflektorelement reflektierte Licht mittels zumindest eines innerhalb eines Gehäuses des Signalgebers angeordneten Lichtsensors erfasst ist.

Gemäß einer weiteren besonders bevorzugten Ausgestaltung des erfindungsgemäßen Verfahrens wird der Verschmutzungsgrad der Abschlussscheibe eines LED-Signalgebers ermittelt.

Vorteilhafterweise kann das erfindungsgemäße Verfahren auch derart ausgestaltet sein, dass das von dem zumindest einen Reflektorelement reflektierte Licht der Lichtquelle von Fremdlicht unterschieden wird.

Gemäß einer besonders bevorzugten Weiterbildung des erfindungsgemäßen Verfahrens wird das von dem zumindest einen Reflektorelement reflektierte Licht der Lichtquelle anhand einer Modulation von Fremdlicht unterschieden.

Vorzugsweise kann das erfindungsgemäße Verfahren auch derart ausgestaltet sein, dass über eine Kommunikationsschnittstelle Messwerte des zumindest einen Lichtsensors und/oder eine Information zum Verschmutzungsgrad der Abschlussscheibe an eine Steuereinheit übertragen werden.

Vorzugsweise kann das erfindungsgemäße Verfahren weiterhin auch derart ablaufen, dass die Kommunikationsschnittstelle als Zweidrahtschnittstelle ausgebildet ist und die Messwerte des zumindest einen Lichtsensors und/oder die Information zum Verschmutzungsgrad der Abschlussscheibe durch Veränderung eines über die Zweidrahtleitung fließenden Stroms an die Steuereinheit übertragen werden.

Im Folgenden wird die Erfindung anhand von Ausführungsbeispielen näher erläutert. Hierzu zeigt die
- Figur: zur Erläuterung eines Ausführungsbeispiels des erfindungsgemäßen Verfahrens in einer schematischen Skizze einen Ausschnitt eines Ausführungsbeispiels einer erfindungsgemäßen Lichtsignaleinrichtung.

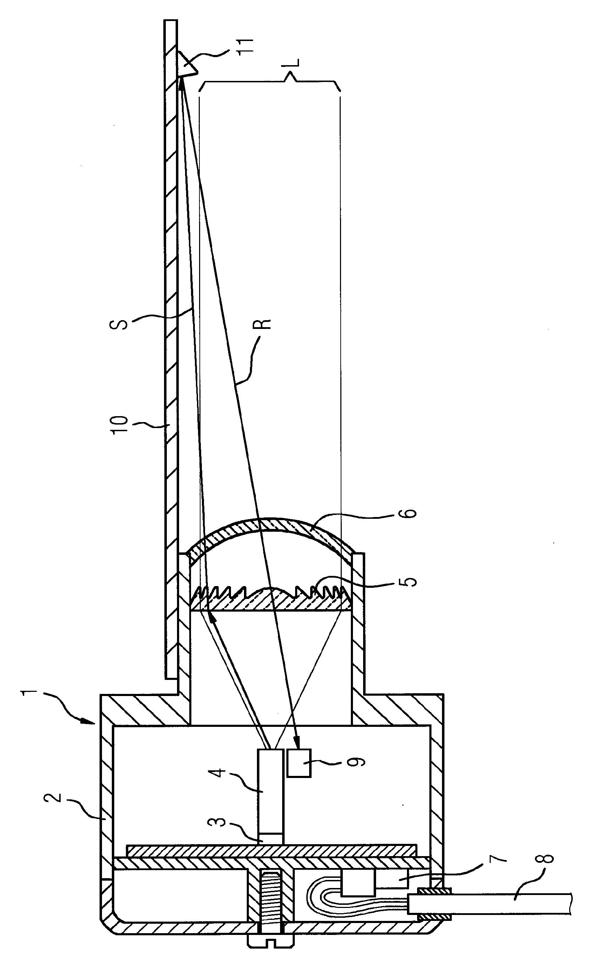

In der Figur ist ein Teil einer Lichtsignaleinrichtung 1 dargstellt. Im Rahmen des beschriebenen Ausführungsbeispiels sei hierbei angenommen, dass es sich bei der Lichtsignaleinrichtung 1 um eine Eisenbahn-Lichtsignaleinrichtung, d.h. eine Lichtsignaleinrichtung der Eisenbahnsicherungstechnik, handelt.

Die Lichtsignaleinrichtung 1 weist einen Signalgeber 2 mit einer Lichtquelle 3 auf. Bei dem Signalgeber 2 handelt es sich dabei dahingehend um einen LED-Signalgeber, dass die Lichtquelle 3 zumindest eine LED umfasst. Über einen Lichtleiter 4 wird das von der Lichtquelle 3 abgestrahlte Licht einer Optik 5 in Form einer Fresnel-Linse zugeführt und über eine Abschlussscheibe 6, die beispielsweise als Abschlussglas ausgeführt sein kann, von dem Signalgeber 2 nach außen abgestrahlt. Im Rahmen der Darstellung der Figur ist das abgestrahlte Licht hierbei mit dem Bezugszeichen L gekennzeichnet.

Der Signalgeber 2 weist darüber hinaus eine Elektronik 7 sowie ein Anschlusskabel 8 auf, über das der Signalgeber 2 an eine Versorgungsleitung der Lichtsignaleinrichtung 1 angeschlossen ist.

Um den Verschmutzungsgrad der Abschlussscheibe 6 des Signalgebers 2 zuverlässig und mit vergleichsweise hoher Genauigkeit detektieren zu können und damit eine bedarfsgerechte Wartung beziehungsweise Reinigung der Abschlussscheibe 6 zu ermöglichen, ist innerhalb eines Gehäuses des Signalgebers 2 darüber hinaus ein Lichtsensor 9 vorgesehen. Diese erfasst insbesondere von der Lichtquelle 3 beziehungsweise dem Lichtleiter 4 abgestrahltes Licht, das ausgehend von der Abschlussscheibe 6 von einem Reflektorelement 11, das an der Innenseite einer Abschirmblende 10 beziehungsweise Schute des Signalgebers 2 beziehungsweise der Lichtsignaleinrichtung 1 angebracht ist, in Richtung des Lichtsensors 9 reflektiert wird. Dies ist in der Figur durch einen ausgehenden Lichtstrahl S angedeutet, der von dem Reflektorelement 11 reflektiert wird und als reflektierter Lichtstrahl R zu dem Lichtsensor 9 zurückläuft.

Zur Vermeidung von möglichen Störeinflüssen ist die Lichtsignaleinrichtung 1 oder der Lichtsensor 9 beziehungsweise eine nachgeschaltete Auswerteelektronik des Lichtsensors 9, die beispielsweise Bestandteil der Elektronik 7 des Signalgebers 2 sein kann, zum Unterscheiden des von dem Reflektorelement 11 reflektierten Lichts der Lichtquelle 3 von Fremdlicht ausgebildet. Dies kann beispielsweise derart geschehen, dass von der Lichtquelle 3, wie dies bei LEDs üblich ist, moduliertes Licht ausgestrahlt wird und anhand der Modulation das reflektierte Licht der Lichtquelle 3 von Fremdlicht unterschieden wird.

Die Ermittlung des Verschmutzungsgrades der Abschlussscheibe 6 des Signalgebers 2 kann einerseits von einer Auswerteeinrichtung der Lichtsignaleinrichtung 1 vorgenommen werden. In diesem Fall wird über eine Kommunikationsschnittstelle der Lichtsignaleinrichtung 1 zu einer Steuereinheit, die beispielsweise als Komponente eines Stellwerks ausgebildet sein kann, vorzugsweise lediglich eine Information zum Verschmutzungsgrad der Abschlussscheibe 6 übertragen. Dies kann beispielsweise derart geschehen, dass lediglich dann eine Diagnosemeldung an die Steuereinheit übertragen wird, wenn eine Reinigung der Abschlussscheibe 6 in absehbarer Zeit durchzuführen ist. Andererseits ist es alternativ hierzu beispielsweise auch möglich, dass von der Lichtsignaleinrichtung 1 über die Kommunikationsschnittstelle Messwerte des Lichtsensors 9 an die Steuereinheit übertragen werden und diese selbst im Folgenden aus den empfangenen Messwerten den Verschmutzungsgrad der Abschlussscheibe 6 ermittelt.

Unabhängig davon, welche Komponente die entsprechende Auswertung vornimmt, stellt die Intensität beziehungsweise Stärke des von der Sensoreinrichtung 9 erfassten Lichts der Lichtquelle 3, das insbesondere von dem Reflektorelement 11 herrührt und die Abschlussscheibe 6 somit zweimal durchdrungen hat, ein Maß für den Verschmutzungsgrad der Abschlussscheibe 6 dar.

Es sei darauf hingewiesen, dass auch mehrere Reflektorelemente 11 an der Innenseite der Abschirmblende 10 vorgesehen sein können. Darüber hinaus ist es im Sinne einer Redundanz beispielsweise auch möglich, dass mehrere Lichtsensoren 9 vorgesehen sind. Diese könnten grundsätzlich auch außerhalb des Gehäuses des Signalgebers 2 angeordnet sein, d.h. beispielsweise ebenfalls an der Innenseite der Abschirmblende 10 befestigt sein. Im Sinne eines Schutzes des Lichtsensors 9 beziehungsweise der Lichtsensoren vor Umwelteinflüssen sowie für eine erleichterte Anbindung an sonstige Komponenten des Signalgebers 2 ist eine Anordnung des zumindest einen Lichtsensors 9 in dem Gehäuse des Signalgebers 2 jedoch vorteilhaft.

Insbesondere für den Fall, dass es sich um einen Signalgeber mit einer Lichtquelle in Form einer Glühlampe oder aber insbesondere um einen LED-Signalgeber handelt, der einen entsprechenden optischen Signalgeber in einer Lichtsignaleinrichtung 1 ersetzt hat, kann es in der Praxis vorkommen, dass die Lichtsignaleinrichtung 1 beziehungsweise der Signalgeber 2 über eine Zweidrahtschnittstelle an die Steuereinheit angebunden ist. Diese Zweidrahtschnittstelle, die der Stromversorgung des Signalgebers 2 dient, kann in diesem Fall vorteilhafterweise derart als Kommunikationsschnittstelle verwendet werden, dass die Messwerte des zumindest einen Lichtsensors 9 und/oder die Information zum Verschmutzungsgrad der Abschlussscheibe 6 durch Veränderung eines über die Zweidrahtleitung fließenden Stroms an die Steuereinheit übertragen werden. Dies ist insbesondere dahingehend vorteilhaft, dass auf eine zusätzliche Kommunikationsschnittstelle allein zur Übertragung einer Diagnosemeldung in Form der Messwerte des zumindest einen Lichtsensors 9 beziehungsweise der Information zum Verschmutzungsgrad der Abschlussscheibe 6 an die Steuereinheit verzichtet werden kann.

Entsprechend den vorstehenden Ausführungen im Zusammenhang mit den beschriebenen Ausführungsbeispielen weisen die erfindungsgemäße Lichtsignaleinrichtung sowie das erfindungsgemäße Verfahren insbesondere den Vorteil auf, dass mittels des zumindest einen Reflektorelements 11 eine gezielte und deutliche Erhöhung der Menge des seitens des Lichtsensors 9 erfassten Lichts der Lichtquelle 3, das die Abschlussscheibe 6 durchdrungen hat, ermöglicht wird. Hierdurch wird vorteilhafterweise die Zuverlässigkeit sowie die Genauigkeit der Ermittlung des Verschmutzungsgrades der Abschlussscheibe 6 erhöht, was letztlich zu einer Erhöhung der Betriebssicherheit sowie dahingehend zu einer Reduktion der Betriebskosen führt, dass eine Reinigung der Abschlussscheibe 6 ausschließlich dann durchzuführen ist, wenn dies im jeweiligen Einzelfall tatsächlich erforderlich ist.

## Patentansprüche

1. Lichtsignaleinrichtung (1) mit zumindest einem Lichtsensor (9) sowie einem Signalgeber (2), der eine Lichtquelle (3) und eine Abschlussscheibe (6) aufweist,
**dadurch gekennzeichnet, dass**
an der Innenseite einer die Abschlussscheibe (6) schützenden Abschirmblende (10) zumindest ein Reflektorelement (11) vorgesehen ist, durch das ein Teil des von der Lichtquelle (3) ausgestrahlten Lichts in Richtung des zumindest einen Lichtsensors (9) reflektiert wird.

2. Lichtsignaleinrichtung (1) nach Anspruch 1,
**dadurch gekennzeichnet, dass**
der zumindest eine Lichtsensor (9) innerhalb eines Gehäuses des Signalgebers (2) angeordnet ist.

3. Lichtsignaleinrichtung (1) nach Anspruch 1 oder 2,
**dadurch gekennzeichnet, dass**
der Signalgeber (2) ein LED-Signalgeber ist.

4. Lichtsignaleinrichtung (1) nach einem der vorangehenden Ansprüche,
**dadurch gekennzeichnet, dass**
die Lichtsignaleinrichtung (1) zum Unterscheiden des von dem zumindest einen Reflektorelement (11) reflektierten Lichts der Lichtquelle (3) von Fremdlicht ausgebildet ist.

5. Lichtsignaleinrichtung (1) nach Anspruch 4,
**dadurch gekennzeichnet, dass**
- die Lichtquelle (3) zur Modulation des ausgestrahlten Lichts ausgebildet ist und
- die Lichtsignaleinrichtung (1) derart ausgebildet ist, dass sie das von dem zumindest einen Reflektorelement (11) reflektierte Licht der Lichtquelle (3) anhand der Modulation von Fremdlicht unterscheidet.

6. Lichtsignaleinrichtung (1) nach einem der vorangehenden Ansprüche,
**dadurch gekennzeichnet, dass**
die Lichtsignaleinrichtung (1) eine Auswerteeinrichtung aufweist zum Bestimmen des Verschmutzungsgrades der Abschlussscheibe (6) anhand der Intensität des durch den zumindest einen Lichtsensor (9) erfassten Lichts.

7. Lichtsignaleinrichtung (1) nach einem der vorangehenden Ansprüche,
**dadurch gekennzeichnet, dass**
die Lichtsignaleinrichtung (1) eine Kommunikationsschnittstelle aufweist zum Übertragen von Messwerten des zumindest einen Lichtsensors (9) und/oder einer Information zum Verschmutzungsgrad der Abschlussscheibe (6) an eine Steuereinheit.

8. Lichtsignaleinrichtung (1) nach Anspruch 7,
**dadurch gekennzeichnet, dass**
die Kommunikationsschnittstelle als Zweidrahtschnittstelle ausgebildet ist und der Signalgeber (2) ausgebildet ist, die Messwerte des zumindest einen Lichtsensors (9) und/oder die Information zum Verschmutzungsgrad der Abschlussscheibe (6) durch Veränderung eines über die Zweidrahtleitung fließenden Stroms an die Steuereinheit zu übertragen.

9. Verfahren zum Ermitteln des Verschmutzungsgrades einer Abschlussscheibe (6) eines Signalgebers (2), wobei
- mittels zumindest eines Lichtsensors (9) von einer Lichtquelle (3) des Signalgebers (2) ausgestrahltes, von zumindest einem an der Innenseite einer die Abschlussscheibe (6) schützenden Abschirmblende (10) vorgesehenen Reflektorelement (11) in Richtung des zumindest einen Lichtsensors (9) reflektiertes Licht erfasst wird und
- anhand der Intensität des durch den zumindest einen Lichtsensor erfassten Lichts der Verschmutzungsgrad der Abschlussscheibe (6) ermittelt wird.

10. Verfahren nach Anspruch 9,
**dadurch gekennzeichnet, dass**
das von dem zumindest einem Reflektorelement (11) reflektierte Licht mittels zumindest eines innerhalb eines Gehäuses des Signalgebers (2) angeordneten Lichtsensors (9) erfasst wird.

11. Verfahren nach Anspruch 9 oder 10,
**dadurch gekennzeichnet, dass**
der Verschmutzungsgrad der Abschlussscheibe (6) eines LED-Signalgebers ermittelt wird.

12. Verfahren nach einem der Ansprüche 9 bis 11,
**dadurch gekennzeichnet, dass**
das von dem zumindest einen Reflektorelement (11) reflektierte Licht der Lichtquelle (3) von Fremdlicht unterschieden wird.

13. Verfahren nach Anspruch 12,
**dadurch gekennzeichnet, dass**
das von dem zumindest einen Reflektorelement (11) reflektierte Licht der Lichtquelle (3) anhand einer Modulation von Fremdlicht unterschieden wird.

14. Verfahren nach einem der Ansprüche 9 bis 13,
**dadurch gekennzeichnet, dass**
über eine Kommunikationsschnittstelle Messwerte des zumindest einen Lichtsensors (9) und/oder eine Information zum Verschmutzungsgrad der Abschlussscheibe (6) an eine Steuereinheit übertragen werden.

15. Verfahren nach Anspruch 14,
**dadurch gekennzeichnet, dass**
die Kommunikationsschnittstelle als Zweidrahtschnittstelle ausgebildet ist und die Messwerte des zumindest einen Lichtsensors (9) und/oder die Information zum Verschmutzungsgrad der Abschlussscheibe (6) durch Veränderung eines über die Zweidrahtleitung fließenden Stroms an die Steuereinheit übertragen werden.

## Claims

1. Light signal device (1) with at least one light sensor (9) and one signal generator (2) which has a light source (3) and a shutter disk (6),
**characterised in that**
at least one reflector element (11) is provided on the inside of a screening stop (10) protecting the shutter disk (6), through which reflector element (11) some of the light emitted by the light source (3) is reflected in the direction of the at least one light sensor (9).

2. Light signal device (1) according to claim 1,
**characterised in that**
the at least one light sensor (9) is disposed inside a housing of the signal generator (2).

3. Light signal device (1) according to claim 1 or 2,
**characterised in that**
the signal generator (2) is an LED signal generator.

4. Light signal device (1) according to one of the preceding claims,
**characterised in that**
the light signal device (1) is embodied to distinguish between the light from the light source (3) reflected by the at least one reflector element (11) and extraneous light.

5. Light signal device (1) according to claim 4,
**characterised in that**
- the light source (3) is embodied to modulate the emitted light and
- the light signal device (1) is embodied such that it distinguishes between the light from the light source (3) reflected by the at least one reflector element (11) and extraneous light on the basis of the modulation.

6. Light signal device (1) according to one of the preceding claims,
**characterised in that**
the light signal device (1) has an evaluation unit for determining the degree of soiling of the shutter disk (6) on the basis of the intensity of the light captured by the at least one light sensor (9).

7. Light signal device (1) according to one of the preceding claims,
**characterised in that**
the light signal device (1) has a communications interface for transmitting measured values of the at least one light sensor (9) and/or information about the degree of soiling of the shutter disk (6) to a control unit.

8. Light signal device (1) according to claim 7,
**characterised in that**
the communications interface is embodied as a two-wire interface and the signal generator (2) is embodied to transmit the measured values of the at least one light sensor (9) and/or the information about the degree of soiling of the shutter disk (6) to the control unit by varying a current flowing via the two-wire line.

9. Method for ascertaining the degree of soiling of a shutter disk (6) of a signal generator (2), wherein
- by means of at least one light sensor (9) light emitted by a light source (3) of the signal generator (2) and reflected by at least one reflector element (11) provided on the inside of a screening stop (10) protecting the shutter disk (6) in the direction of the at least one light sensor (9) is captured and
- the degree of soiling of the shutter disk (6) is ascertained on the basis of the intensity of the light captured by the at least one light sensor.

10. Method according to claim 9,
**characterised in that**
the light reflected by the at least one reflector element (11) is captured by means of at least one light sensor (9) disposed inside a housing of the signal generator (2).

11. Method according to claim 9 or 10,
**characterised in that**
the degree of soiling of the shutter disk (6) of an LED signal generator is ascertained.

12. Method according to one of claims 9 to 11,
**characterised in that**
the light from the light source (3) reflected by the at least one reflector element (11) is distinguished from extraneous light.

13. Method according to claim 12,
**characterised in that**
the light from the light source (3) reflected by the at least one reflector element (11) is distinguished from extraneous light on the basis of modulation.

14. Method according to one of claims 9 to 13,
**characterised in that**
measured values of the at least one light sensor (9) and/or information about the degree of soiling of the shutter disk (6) are transmitted to a control unit via a communications interface.

15. Method according to claim 14,
**characterised in that**
the communications interface is embodied as a two-wire interface and the measured values of the at least one light sensor (9) and/or the information about the degree of soiling of the shutter disk (6) are transmitted to the control unit by varying a current flowing via the two-wire line.

## Revendications

1. Dispositif ( 1 ) de signalisation lumineuse ayant au moins un capteur ( 9 ) de lumière, ainsi qu'un émetteur ( 2 ) de signaux, qui comporte une source ( 3 ) lumineuse et une vitre ( 6 ) de fermeture,
**caractérisé en ce que**
sur la face intérieure d'un écran ( 10 ) de protection protégeant la vitre ( 6 ) de fermeture, est prévu au moins un élément ( 11 ) formant réflecteur, par lequel une partie de la lumière émise par la source ( 3 ) lumineuse est réfléchie en direction du au moins un capteur ( 9 ) de lumière.

2. Dispositif ( 1 ) de signalisation lumineuse suivant la revendication 1,
**caractérisé en ce que**
le au moins un capteur ( 9 ) de lumière est disposé à l'intérieur d'un boîtier de l'émetteur ( 2 ) de signaux.

3. Dispositif ( 1 ) de signalisation lumineuse suivant la revendication 1 ou 2,
**caractérisé en ce que**
l'émetteur ( 2 ) de signaux est un émetteur de signaux DEL.

4. Dispositif ( 1 ) de signalisation lumineuse suivant l'une des revendications précédentes,
**caractérisé en ce que**
le dispositif ( 1 ) de signalisation lumineuse est constitué pour distinguer de la lumière parasite, la lumière de la source ( 3 ) lumineuse réfléchie par le au moins un élément ( 11 ) formant réflecteur.

5. Dispositif ( 1 ) de signalisation lumineuse suivant la revendication 4,
**caractérisé en ce que**
- la source ( 3 ) lumineuse est constituée pour la modulation de la lumière émise et
- le dispositif ( 1 ) de signalisation lumineuse est constitué de manière à ce qu'il distingue, au moyen de la modulation de la lumière parasite, la lumière de la source ( 3 ) lumineuse réfléchie par le au moins un élément ( 11 ) formant réflecteur.

6. Dispositif ( 1 ) de signalisation lumineuse suivant l'une des revendications précédentes,
**caractérisé en ce que**
le dispositif ( 1 ) de signalisation lumineuse a un dispositif d'exploitation pour la détermination du degré de salissure de la vitre ( 6 ) de fermeture au moyen de l'intensité de la lumière détectée par le au moins un capteur ( 9 ) de lumière.

7. Dispositif ( 1 ) de signalisation lumineuse suivant l'une des revendications précédentes,
**caractérisé en ce que**
le dispositif ( 1 ) de signalisation lumineuse a une interface de communication pour la transmission de valeurs de mesure du au moins un capteur ( 9 ) de lumière et/ou d'une information sur le degré de salissure de la vitre ( 6 ) de fermeture à une unité de commande.

8. Dispositif ( 1 ) de signalisation lumineuse suivant la revendication 7,
**caractérisé en ce que**
l'interface de communication est constituée sous la forme d'une interface bifilaire et l'émetteur ( 2 ) de signaux est constitué pour transmettre à l'unité de commande les valeurs de mesure du au moins un capteur ( 9 ) de lumière et/ou l'information sur le degré de salissure de la vitre ( 6 ) de fermeture en modifiant un courant passant par la ligne bifilaire.

9. Procédé de détermination du degré de salissure d'une vitre ( 6 ) de fermeture d'un émetteur ( 2 ) de signaux, dans lequel
- au moyen d'au moins un capteur ( 9 ) de lumière, on détecte de la lumière réfléchie dans la direction du au moins un capteur ( 9 ) de lumière, on détecte de la lumière émise par une source ( 3 ) lumineuse de l'émetteur ( 2 ) de lumière et réfléchie dans la direction du au moins un capteur ( 9 ) de lumière par au moins un élément ( 11 ) formant réflecteur prévu sur la face intérieure d'un écran ( 10 ) de protection protégeant la vitre ( 6 ) de fermeture et
- au moyen de l'intensité de la lumière détectée par le au moins un capteur de lumière, on détermine le degré de salissure de la vitre ( 6 ) de fermeture.

10. Procédé suivant la revendication 9,
**caractérisé en ce que**
on détecte la lumière réfléchie par le au moins un élément ( 11 ) formant réflecteur au moyen d'au moins un capteur ( 9 ) de lumière disposé à l'intérieur d'un boîtier de l'émetteur ( 2 ) de signaux.

11. Procédé suivant la revendication 9 ou 10,
**caractérisé en ce que**
on détermine le degré de salissure de la vitre ( 6 ) de fermeture d'un émetteur de signaux DEL.

12. Procédé suivant l'une des revendications 9 à 11,
**caractérisé en ce que**
on distingue de la lumière parasite, la lumière de la source ( 3 ) lumineuse réfléchie par le au moins un élément ( 11 ) formant réflecteur.

13. Procédé suivant la revendication 12,
**caractérisé en ce que**
on distingue la lumière de la source ( 3 ) lumineuse réfléchie par le au moins un élément ( 11 ) formant réflecteur au moyen d'une modulation de la lumière parasite.

14. Procédé suivant l'une des revendications 9 à 13,
**caractérisé en ce que**
on transmet à une unité de commande, par une interface de communication, des valeurs de mesure du au moins un capteur ( 9 ) de lumière et/ou une information sur le degré de salissure de la vitre ( 6 ) de fermeture.

15. Procédé suivant la revendication 14,
**caractérisé en ce que**
l'interface de communication est constituée sous la forme d'une interface bifilaire et on transmet à l'unité de commande des valeurs de mesure du au moins un capteur ( 9 ) de lumière et/ou l'information sur le degré de salissure de la vitre ( 6 ) de fermeture en modifiant un courant passant par la ligne bifilaire.
